(19) Europäisches Patentamt / European Patent Office / Office européen des brevets

(11) EP 3 467 031 B1

(12) # EUROPEAN PATENT SPECIFICATION

(45) Date of publication and mention of the grant of the patent:
**18.01.2023 Bulletin 2023/03**

(21) Application number: **17802670.4**

(22) Date of filing: **18.05.2017**

(51) International Patent Classification (IPC):
***C08L 69/00*** (2006.01) ***C08K 3/36*** (2006.01)
***C08K 5/134*** (2006.01) ***C08K 5/524*** (2006.01)
***C08L 67/03*** (2006.01) ***G02B 1/04*** (2006.01)

(52) Cooperative Patent Classification (CPC):
(C-Sets available)
**C08K 3/36; C08K 5/134; C08K 5/524; C08L 67/03; C08L 69/00; G02B 1/04** (Cont.)

(86) International application number:
**PCT/JP2017/018652**

(87) International publication number:
**WO 2017/204078 (30.11.2017 Gazette 2017/48)**

(54) **RESIN COMPOSITION AND MOLDED ARTICLE**

HARZZUSAMMENSETZUNG UND FORMARTIKEL

COMPOSITION DE RÉSINE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2016 JP 2016103325**

(43) Date of publication of application:
**10.04.2019 Bulletin 2019/15**

(73) Proprietor: **Unitika Ltd.**
**Amagasaki-shi, Hyogo 660-0824 (JP)**

(72) Inventor: **NABESHIMA, Yutaka**
**Uji-shi**
**Kyoto 611-0021 (JP)**

(74) Representative: **Vossius & Partner**
**Patentanwälte Rechtsanwälte mbB**
**Siebertstrasse 3**
**81675 München (DE)**

(56) References cited:
**EP-A1- 1 956 044** **WO-A1-2007/063795**
**CN-A- 104 804 398** **JP-A- 2002 194 193**
**JP-A- 2003 113 296** **JP-A- 2009 143 979**
**JP-A- 2010 163 549** **KR-A- 20150 081 989**

- **Alan Rawle: "BASIC PRINCIPLES OF PARTICLE SIZE ANALYSIS", Malvern Technical Paper, no. MRK034, 1 January 1993 (1993-01-01), pages 1-8, XP055009141, UK**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/03, C08K 3/36, C08L 69/00;**
**C08L 69/00, C08K 3/36, C08L 67/03**

## Description

### TECHNICAL FIELD

The present invention relates to a resin composition and a molded article obtained by molding the same.

### BACKGROUND ART

A camera module part having an imaging element such as a CCD (Charge Coupled Device) and a CMOS (Complementary Metal Oxide Semiconductor) is used in a cellular phone, a game machine, a personal computer, a car-mounted camera, a cellular phone terminal or the like. In recent years, further miniaturization and high-performance have been promoted, and development of a small camera module part has been promoted.

The camera module part is generally subjected to soldering of electric wiring. For this reason, a precision part such as a lens unit and an actuator constituting a camera module part is required to have the excellent dimensional stability also when exposed to a soldering temperature (up to around 150°C). Furthermore, since on the imaging element surface and the lens surface in a camera module, a black flaw and a blot are also easily generated due to the subtle dust, and camera performance is reduced, in a resin material constituting the camera module part, it is also required that generation of broken pieces and dusts at the time of production and at the time of use is suppressed (dust generation resistance). Furthermore, small reduction in a molecular weight of a resin (molding stability) is also required.

As the camera module part, Patent Literatures 1 to 3 disclose a molded article comprising a liquid crystal polymer.

Meanwhile, Patent Literature 4 discloses a molded article obtained by molding a resin composition containing a polyarylate resin, a polycarbonate resin and spherical silica.

### CITATIONS LIST

### PATENT LITERATURE

Patent Literature 1: JP-A-2008-1848
Patent Literature 2: JP-A-2010-106165
Patent Literature 3: JP-A-2011-68831
Patent Literature 4: Patent No. 5246646 and EP 1 956 044 A1

### SUMMARY OF INVENTION

### PROBLEMS TO BE SOLVED BY THE INVENTION

However, for the above-mentioned requirement, it is impossible to state that molded articles of Patent Literatures 1 to 3 are sufficiently excellent in terms of the dust generation resistance because of a liquid crystal polymer that is easily fibrillated. Furthermore, it is impossible to state that all properties of the heat resistance, the dimensional stability, and the molding stability are sufficiently high.

It is impossible to state that the molded article of Patent Literature 4 is sufficiently excellent in the dust generation resistance and the molding stability.

In recent years, while requirement of the external appearance by users has increased, when a filler is contained in the molded article, floating of the filler to the molded article surface has become a new problem, and improvement in the external appearance is demanded.

An object of the present invention is to provide a resin composition excellent in a molding stability, which can be molded into a molded article excellent in a dust generation resistance, a heat resistance, a dimensional stability, and an external appearance, and a molded article obtained by molding the resin composition.

### MEANS FOR SOLVING PROBLEMS

The present inventors intensively made study in order to solve the above-mentioned problems, and as a result, found out that by using silica particles having a specific average particle diameter and a specific phosphite ester compound in a resin composition containing a polyarylate resin and a polycarbonate resin in combination, the above-mentioned object can be attained, leading to the present invention.

That it, essential features of the present invention are as follows:

(1) A resin composition comprising a polyarylate resin, a polycarbonate resin, silica particles having an average particle diameter of 0.5 to 10 μm and a phosphite ester compound represented by the general formula (I),

wherein a mass ratio between the polyarylate resin and the polycarbonate resin is 25/75 to 90/10,
a content of the silica particles is 5 to 60 parts by mass based on 100 parts by mass of a total amount of the polyarylate resin and the polycarbonate resin, and
a content of the phosphite ester compound is 0.01 to 1 part by mass based on 100 parts by mass of a total amount of the polyarylate resin and the polycarbonate resin:

[Chemical formula 1]

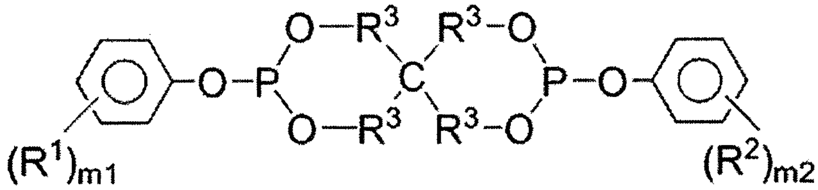

(I)

(in the formula (I), m1 and m2 are each independently an integer of 0 to 5;
$R^1$ and $R^2$ each independently represent an alkyl group having 1 to 12 carbon atoms, which may have a substituent; and
four $R^3$s each independently represent an alkylene group having 1 to 5 carbon atoms.).

(2) The resin composition of (1), wherein the phosphite ester compound is a compound represented by the general formula (1-1):

[Chemical formula 2]

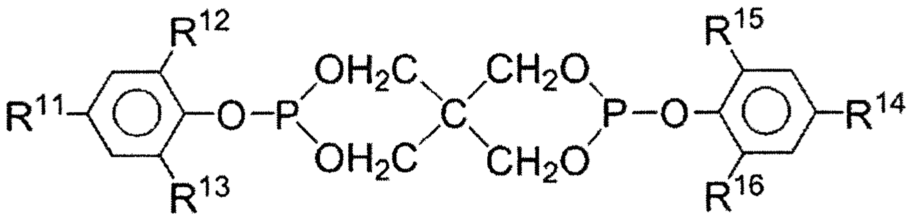

(I-1)

(in the formula (I-1), $R^{11}$ to $R^{16}$ are each independently a hydrogen atom or an alkyl group having 1 to 10 carbon atoms, which may have a substituent.).
(3) The resin composition of (1) or (2), wherein the resin composition further contains a hindered phenol compound represented by the general formula (II) in an amount of 0.01 to 1 part by mass based on 100 parts by mass of a total amount of the polyarylate resin and the polycarbonate resin:

[Chemical formula 3]

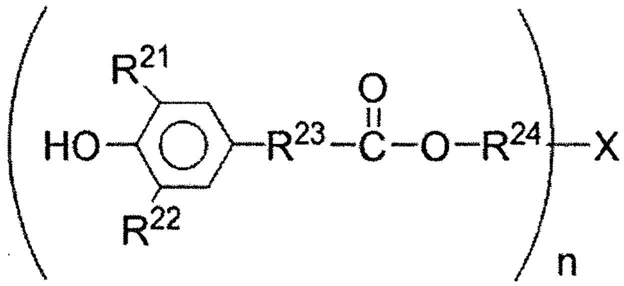

(II)

(in the formula (II), X represents a hydrocarbon group or an ether group;
n is an integer of 1 or more, which is determined depending on X;

$R^{21}$ and $R^{22}$ each independently represent a hydrogen atom or an alkyl group having 1 to 9 carbon atoms; and $R^{23}$ and $R^{24}$ each independently represent an alkylene group having 1 to 5 carbon atoms.).

(4) A molded article comprising the resin composition of any of (1) to (3).
(5) The molded article of (4), wherein the molded article is a camera module part.
(6) The molded article of (4), wherein the molded article is a lens unit part.
(7) The molded article of (4), wherein the molded article is an actuator part.

EFFECTS OF THE INVENTION

The resin composition of the present invention is excellent in the molding stability.
The resin composition of the present invention can be molded into a molded article excellent in the dust generation resistance, the heat resistance, the dimensional stability, and the external appearance.
A molded article obtained by molding the resin composition of the present invention is also excellent in the strength, particularly, the bending strength.

BRIEF DESCRIPTION OF DRAWINGS

FIG. 1 is a view for illustrating a test specimen produced in Example, (A) is a perspective of a test specimen, and (B) is a front view and a side view of a test specimen.

MODES FOR CARRYING OUT THE INVENTION

The resin composition of the present invention contains a polyarylate resin, a polycarbonate resin, silica particles, and a phosphite ester compound.
The polyarylate resin used in the present invention is a resin that is formed by an aromatic dicarboxylic acid residue unit and a bisphenol residue unit.
A polyarylate raw material for introducing a bisphenol residue is bisphenols. Specific examples thereof include 2,2-bis(4-hydroxyphenyl)propane (hereinafter, abbreviated as "bisphenol A"), 2,2-bis(4-hydroxy-3,5-dimethylphenyl)propane, 2,2-bis(4-hydroxy-3,5-dibromophenyl)propane, 2,2-bis(4-hydroxy-3,5-dichlorophenyl)propane, 4,4'-dihydroxydiphenylsulfone, 4,4'-dihydroxydiphenyl ether, 4,4'-dihydroxydiphenyl sulfide, 4,4'-dihydroxydiphenyl ketone, 4,4'-dihydroxydiphenylmethane, 1,1-bis(4-hydroxyphenyl)cyclohexane, and the like. These compounds may be used alone, or two or more of them may be used in combination. In particular, bisphenol A is economically preferable.
Preferable examples of a raw material for introducing an aromatic dicarboxylic acid residue include terephthalic acid and isophthalic acid. In the present invention, a polyarylate resin composition obtained by using both of them by mixing is particularly preferable in terms of the melt processability and the mechanical properties. A mixing ratio thereof (terephthalic acid/isophthalic acid) can be arbitrarily selected, and a range as expressed by a molar fraction is preferably 90/10 to 10/90, more preferably 70/30 to 30/70, further preferably 60/40 to 40/60, optimally 50/50. When a mixing molar fraction of terephthalic acid is less than 10 mol%, or exceeds 90 mol%, it becomes difficult to obtain a sufficient polymerization degree in some cases, in the case where polymerization is performed by an interfacial polymerization method.
The polycarbonate resin used in the present invention is a resin that is formed by a bisphenol residue unit and a polycarbonate resin unit.
Examples of bisphenols as a raw material for introducing a bisphenol residue unit include bisphenol A, 2,2-bis(3,5-dibromo-4-hydroxyphenyl)propane, 2,2-bis(3,5-dimethyl-4-hydroxyphenyl)propane, 1,1 -bis(4-hydroxyphenyl)cyclohexane, 1,1-bis(3,5-dimethyl-4-hydroxyphenyl)cyclohexane, 1,1 -bis(4-hydroxyphenyl)decane, 1,4-bis(4-hydroxyphenyl)propane, 1,1 -bis(4-hydroxyphenyl)cyclododecane, 4,4'-dihydroxydiphenyl ether, 4,4'-dithiodiphenol, 4,4'-dihydroxy-3,3'-dichlorodiphenyl ether, 4,4'-dihyroxy-2,5-dihydroxydiphenyl ether, and the like. These may be used alone, or two or more of them may be used in combination.
As a precursor for introducing a carbonate residue unit, carbonyl halide such as phosgene, and carbonic acid ester such as diphenyl carbonate can be used.
In the present invention, a resin comprising the polyarylate resin and the polycarbonate resin may be produced by melt-kneading a polyarylate resin single substance and a polycarbonate resin single substance, or a copolymer of the polyarylate resin and the polycarbonate resin may be used.
As a method of polymerizing the polyarylate resin, a method of polymerizing the polycarbonate resin, and a method of polymerizing a copolymer resin of polyarylate and polycarbonate, an interfacial polymerization method and a melt polymerization method are not particularly limited as long as they satisfy the object of the present invention, and the known method may be used.
In the present invention, the limiting viscosity of the resin comprising the polyarylate resin and the polycarbonate

resin is preferably 0.40 to 0.60. When the limiting viscosity is higher than 0.60, the melt viscosity increases, and injection molding becomes difficult. When the limiting viscosity is lower than 0.40, the impact strength of the resulting molded article tends to be deficient. It is preferable that the polyarylate resin and the polycarbonate resin each have the limiting viscosity within the above-mentioned range.

A mass ratio of the polyarylate resin and the polycarbonate resin (polyarylate/polycarbonate) is 25/75 to 90/10, and from a viewpoint of further improvement in the dust generation resistance, the molding stability, and the external appearance, is preferably 25/75 to 70/30, more preferably 25/75 to 50/50, further preferably 25/75 to 40/60. When a ratio of the polyarylate resin is too small, the heat resistance and the dimensional stability reduce. When a ratio of the polyarylate resin is too high, since the flowability is deteriorated, molding becomes difficult.

The dust generation resistance refers to property that at the time of assembling a molded article and at the time of use, a part hardly drops off from the relevant molded article as broken pieces or dusts.

The molding stability refers to property that a molecular weight of a resin is hardly reduced even by molding.

The external appearance is property that a filler such as silica particles is hardly floated to the surface of a molded article, and when a molded article has the black color, the external appearance refers to property that the molded article surface looks more black.

The dimensional stability refers to property that a molded article is hardly dimensionally changed even under the severe environment.

Silica particles used in the present invention are not particularly limited as long as they are silica particles which are used as a filler in the fields of plastics. As silica particles, spherical silica is preferably used, from a viewpoint of further improvement in the dust generation resistance. Spherical is a shape exhibiting maximum diameter/minimum diameter of 1 to 1.3, particularly 1 to 1.2 in a photomicrograph. When other inorganic fine particles are used in place of silica particles, for example, titania particles or alumina particles are used, the dimensional stability reduces.

It is necessary that the content of silica particles be 5 to 60 parts by mass based on 100 parts by mass of a total amount of the polyarylate resin and the polycarbonate resin, and from a viewpoint of further improvement in the dust generation resistance, the strength, the heat resistance, the dimensional stability, the molding stability, and the external appearance, the content is preferably in a range of 20 to 40 parts by mass. When the content is less than 5 parts by mass, the dimensional stability of the resin composition becomes insufficient. When the content exceeds 60% by mass, the inconvenience is generated at the time of passing a step upon production of the resin composition, such as that palletization by melt-kneading extrusion becomes difficult.

In the present invention, an average particle diameter of silica particles to be incorporated into the resin composition is defined by a particle diameter value at weight accumulation 50% when a particle diameter distribution is measured using a laser diffraction particle size distribution meter as a particle size distribution measuring apparatus. This measurement is performed, for example, after silica particles are added to water or an alcohol to the measurement permissible concentration, to prepare suspension, and the particles are dispersed with an ultrasound dispersing machine.

As an average particle diameter of silica particles to be incorporated into the resin composition of the present invention is smaller, the function of a product formed by the resin composition is more hardly hindered, when the silica particles are dropped off from the resin composition to become dusts. On the other hand, when an average particle diameter of silica particles is too small, since silica particles float to the molded article surface and look white, the external appearance is deteriorated. Accordingly, it is necessary that an average particle diameter of silica particles be, practically, 0.5 to 10 $\mu$m, and from a viewpoint of further improvement in the external appearance and the molding stability, an average particle diameter is preferably 2 to 8 $\mu$m, more preferably 2 to 5 $\mu$m. When an average particle diameter exceeds 10 $\mu$m, for example, when the resin composition of the present invention is used in the camera lens part, silica dropped off from the resin composition hinders imaging as dusts, in some cases. When an average particle diameter of silica particles exceeds 10 $\mu$m, the dimensional stability of a part using the resin composition of the present invention becomes insufficient.

In the present invention, a method of producing silica particles is not particularly limited, but silica particles can be produced by the known method. Examples thereof include a method of placing a silica fine powder into high temperature flame to melt and fluidize, and when the fluidized silica becomes spherical utilizing the surface tension, rapidly cooling the sphere to produce silica particles. Alternatively, examples include a method of forming chemical flame with an ignition burner in the atmosphere containing oxygen, placing a silicon powder into this chemical flame at an amount to such an extent that a dust cloud is formed, and causing explosion to produce silica ultrafine particles, and a method of hydrolyzing and agglutinating alkoxysilane under an alkali, and producing silica particles by a sol-gel method.

In order to improve adhesiveness between silica particles and a resin matrix, silica particles may be surface-treated with a silane coupling treating agent.

In order to disperse silica particles in the resin matrix, a dispersant may be used. As the dispersant, for example, a dispersant selected from the group consisting of fatty acid ester and a derivative thereof, fatty acid amide and a derivative thereof, as well as a mixture thereof can be used. Examples of the fatty acid amide include ethylene bishydroxystearic acid amide, ethylene bisstearic acid amide, and the like. By uniform dispersion of silica in the resin matrix,

a mold shrinkage ratio and a linear expansion coefficient are decreased, and the dimensional stability is more improved. An addition amount of the dispersant is desirably 0.01 to 0.5 part by mass based on 100 parts by mass of the resin composition of the present invention.

In the present invention, a phosphite ester compound represented by the general formula (I) is used. By using such phosphite ester compound, all properties of the dust generation resistance, the strength, the heat resistance, the dimensional stability, the molding stability, and the external appearance first become good. When in place of the phosphite ester compound represented by the general formula (I), a phosphite ester compound not included in the relevant phosphite ester compound is used, the molding stability and the dust generation resistance are deteriorated.

[Chemical formula 4]

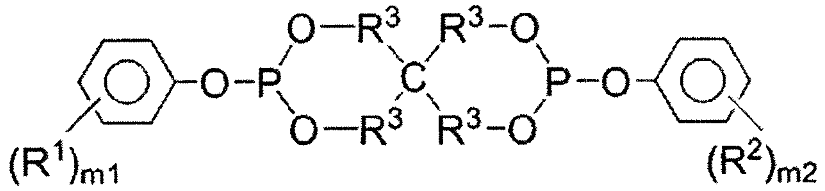

(I)

In the formula (I), m1 and m2 are each independently an integer of 0 to 5, and particularly, from a viewpoint of further improvement in the dust generation resistance, is preferably an integer of 1 to 5, more preferably 1 to 3.

$R^1$ and $R^2$ each independently represent an alkyl group having 1 to 12, preferably 1 to 10, more preferably 1 to 9, further preferably 1 to 5 carbon atoms. Examples of the alkyl group include a methyl group, an ethyl group, a n-propyl group, an isopropyl group, a n-butyl group, an isobutyl group, a sec-butyl group, a tert-butyl group, a pentyl group, a hexyl group, a heptyl group, an octyl group, a nonyl group, a decyl group, an undecyl group, and a lauryl group. In $R^1$ and $R^2$, the alkyl group may have a substituent. Examples of the substituent of the alkyl group in $R^1$ and $R^2$ include an aryl group such as a phenyl group and a naphthyl group (preferably a phenyl group); a halogen atom such as a fluorine atom, a chlorine atom, and a bromine atom (preferably a fluorine atom, a chlorine atom), and the like. A preferable substituent is an aryl group, particularly a phenyl group. When in $R^1$ and $R^2$, the alkyl group has a substituent, the carbon number of the alkyl group does not include the carbon number of the substituent. Specific examples of the alkyl group having a substituent in $R^1$ and $R^2$ include a benzyl group, a phenethyl group, an $\alpha$-methylbenzyl group, an $\alpha,\alpha$-dimethylbenzyl group (= cumyl group), a diphenylmethyl group, a triphenylmethyl group, a mononaphthylmethyl group, a monofluoromethyl group, a monochloromethyl group, and the like. Two or more $R^1$s may be each independently selected. Two or more $R^2$S may be each independently selected.

Four $R^3$s each independently represent an alkylene group having 1 to 5 carbon atoms. Four $R^3$s each independently represent preferably an alkylene group having 1 to 3 carbon atoms. Examples of a preferable alkylene group in $R^3$ include a methylene group, a dimethylene group, and a triethylene group. Most preferable four $R^3$s are each independently a methylene group or a dimethylene group, and particularly a methylene group at the same time.

Among phosphite ester compounds represented by the above-mentioned general formula (I), from a viewpoint of the dust generation resistance, the heat resistance, the dimensional stability, the external appearance, the molding stability, and the strength, a preferable phosphite ester compound is a phosphite ester compound represented by the general formula (I-1).

[Chemical formula 5]

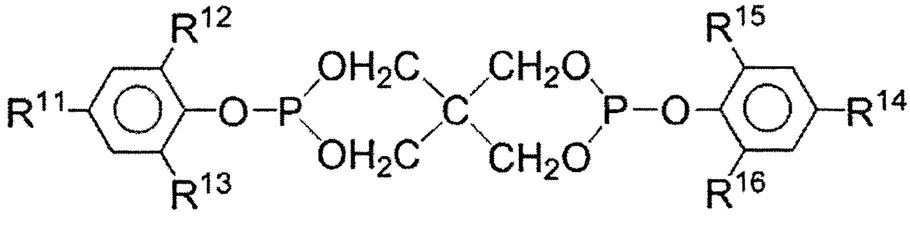

(I-1)

In the formula (I-1), $R^{11}$ and $R^{14}$ are each independently a hydrogen atom or an alkyl group having 1 to 10 carbon atoms. $R^{11}$ and $R^{14}$ each independently represent an alkyl group having preferably 1 to 5, more preferably 1 to 4 carbon atoms. Specific examples of an alkyl group in $R^{11}$ and $R^{14}$ include alkyl groups of the predetermined carbon number, among the same specific examples as those of an alkyl group in $R^1$ and $R^2$. In $R^{11}$ and $R^{14}$, an alkyl group may have a substituent. Examples of the substituent of an alkyl group in $R^{11}$ and $R^{14}$ include the same substituents as the

substituents which may be possessed by an alkyl group in $R^1$ and $R^2$. A preferable substituent of an alkyl group in $R^{11}$ and $R^{14}$ is an aryl group, particularly a phenyl group. Also in $R^{11}$ and $R^{14}$, when an alkyl group has a substituent, the carbon number of an alkyl group does not include the carbon number of the substituent. Specific examples of an alkyl group having a substituent in $R^{11}$ and $R^{14}$ include the same specific examples as those of an alkyl group having a substituent in $R^1$ and $R^2$. Examples of a more preferable alkyl group in $R^{11}$ and $R^{14}$ include a methyl group, an ethyl group, a n-propyl group, an isopropyl group, a n-butyl group, an isobutyl group, a sec-butyl group, a tert-butyl group, a benzyl group, a phenethyl group, an $\alpha$-methylbenzylgroup, an $\alpha,\alpha$-dimethylbenzyl group, a diphenylmethyl group, and the like. Further preferable $R^{11}$ and $R^{14}$ are each independently or simultaneously a methyl group, an ethyl group, a n-propyl group, an isopropyl group, a n-butyl group, an isobutyl group, a sec-butyl group, a tert-butyl group, a benzyl group, a phenethyl group, an $\alpha$-methylbenzylgroup, an $\alpha,\alpha$-dimethylbenzyl group, or a diphenylmethyl group, particularly preferably a methyl group or an $\alpha,\alpha$-dimethylbenzyl group. From a viewpoint of still further improvement in the dust generation resistance and the molding stability, it is preferable that in $R^{11}$ and $R^{14}$, an alkyl group does not have a substituent, and most preferable $R^{11}$ and $R^{14}$ are the same group, particularly a methyl group simultaneously.

$R^{12}$ and $R^{15}$ are each independently a hydrogen atom or an alkyl group having 1 to 10 carbon atoms. $R^{12}$ and $R^{15}$ each independently represent an alkyl group having preferably 1 to 5, more preferably 2 to 5, further preferably 3 to 5 carbon atoms. Specific examples of an alkyl group in $R^{12}$ and $R^{15}$ include, among the same specific examples as those of an alkyl group in $R^1$ and $R^2$, alkyl groups of the predetermined carbon number. In $R^{12}$ and $R^{15}$, an alkyl group may have a substituent. Examples of the substituent of an alkyl group in $R^{12}$ and $R^{15}$ include the same substituents as the substituents which may be possessed by an alkyl group in $R^1$ and $R^2$. A preferable substituent of an alkyl group in $R^{12}$ and $R^{15}$ is an aryl group, particularly a phenyl group. Also in $R^{12}$ and $R^{15}$, when an alkyl group has a substituent, the carbon number of an alkyl group does not include the carbon number of the substituent. Specific examples of an alkyl group having a substituent in $R^{12}$ and $R^{15}$ include the same specific examples as those of an alkyl group having a substituent in $R^1$ and $R^2$. Examples of a more preferable alkyl group in $R^{12}$ and $R^{15}$ include an ethyl group, a n-propyl group, an isopropyl group, a n-butyl group, an isobutyl group, a sec-butyl group, a tert-butyl group, a pentyl group, a phenethyl group, an $\alpha$-methylbenzylgroup, and an $\alpha,\alpha$-dimethylbenzyl group. Further preferable $R^{12}$ and $R^{15}$ are each independently or simultaneously an ethyl group, a n-propyl group, an isopropyl group, a n-butyl group, an isobutyl group, a sec-butyl group, a tert-butyl group, a pentyl group, a benzyl group, a phenethyl group, an $\alpha$-methylbenzylgroup, or an $\alpha,\alpha$-dimethylbenzyl group, particularly preferably a tert-butyl group or an $\alpha,\alpha$-dimethylbenzyl group. From a viewpoint of still further improvement in the dust generation resistance and the molding stability, it is preferable that in $R^{12}$ and $R^{15}$, an alkyl group does not have a substituent, and most preferable $R^{12}$ and $R^{15}$ are the same group, particularly a tert-butyl group simultaneously.

$R^{13}$ and $R^{16}$ are each independently a hydrogen atom or an alkyl group having 1 to 10 carbon atoms. $R^{13}$ and $R^{16}$ each independently represent preferably a hydrogen atom or an alkyl group having 1 to 5 carbon atoms, more preferably an alkyl group having 3 to 5 carbon atoms. Specific examples of an alkyl group in $R^{13}$ and $R^{16}$ include, among the same specific examples as those of an alkyl group in $R^1$ and $R^2$, alkyl groups of the predetermined carbon number. In $R^{13}$ and $R^{16}$, an alkyl group may have a substituent. Examples of the substituent of an alkyl group in $R^{13}$ and $R^{14}$ include the same substituents as the substituents which may be possessed by an alkyl group in $R^1$ and $R^2$. A preferable substituent of an alkyl group in $R^{13}$ and $R^{16}$ is an aryl group, particularly a phenyl group. Also in $R^{13}$ and $R^{16}$, when an alkyl group has a substituent, the carbon number of an alkyl group does not include the carbon number of the substituent. Specific examples of an alkyl group having a substituent in $R^{13}$ and $R^{16}$ include the same specific examples as those of an alkyl group having a substituent in $R^1$ and $R^2$. Examples of a more preferable alkyl group in $R^{13}$ and $R^{16}$ include a n-propyl group, an isopropyl group, a n-butyl group, an isobutyl group, a sec-butyl group, a tert-butyl group, and a pentyl group. Further preferable $R^{13}$ and $R^{16}$ are each independently or simultaneously a hydrogen atom, a n-propyl group, an isopropyl group, a n-butyl group, an isobutyl group, a sec-butyl group, a tert-butyl group, or a pentyl group. Particularly preferable is a hydrogen atom or a tert-butyl group. From a viewpoint of still further improvement in the dust generation resistance and the molding stability, it is preferable that in $R^{13}$ and $R^{16}$, an alkyl group does not have a substituent, and most preferable $R^{13}$ and $R^{16}$ are the same group, particularly a tert-butyl group simultaneously.

Specific examples of the phosphite ester compound represented by the general formula (I) include the following compounds:

Compound (I-1-1): bis(2,6-di-t-butyl-4-methylphenyl)pentaerythritol-diphosphite; in the general formula (1-1), $R^{11}$ = $R^{14}$ = methyl group, $R^{12}$ = $R^{15}$ = tert-butyl group, $R^{13}$ = $R^{16}$ = tert-butyl group;

Compound (1-1-2): bis(2,6-di-t-butyl-4-ethylphenyl)pentaerythritol-diphosphite; in the general formula (I-1), $R^{11}$ = $R^{14}$ = ethyl group, $R^{12}$ = $R^{15}$ = tert-butyl group, $R^{13}$ = $R^{16}$ = tert-butyl group;

Compound (I-1-3): bis(2,4,6-tri-t-butylphenyl)spiropentaerythritol-diphosphite; in the general formula (I-1), $R^{11}$ = $R^{14}$ = tert-butyl group, $R^{12}$ = $R^{15}$ = tert-butyl group, $R^{13}$ = $R^{16}$ = tert-butyl group;

Compound (I-1-4): bis(nonylphenyl)pentaerythritol diphosphite; in the general formula (I), m1 = m2 = 1, $R^1$ = $R^2$ =

nonyl group, $R^3$ = methylene group;

Compound (I-1-5): bis(2,4-di-t-butylphenyl)pentaerythritol diphosphite; in the general formula (1-1), $R^{11}$ = $R^{14}$ = tert-butyl group, $R^{12}$ = $R^{15}$ = tert-butyl group, $R^{13}$ = $R^{16}$ = hydrogen atom;

Compound (I-1-6): bis(2,4-dicumylphenyl)pentaerythritol diphosphite; in the general formula (I-1), $R^{11}$ = $R^{14}$ = $\alpha,\alpha$-dimethylbenzyl group, $R^{12}$ = $R^{15}$ = $\alpha,\alpha$-dimethylbenzyl group, $R^{13}$ = $R^{16}$ = hydrogen atom.

A phosphite ester compound which is more preferable from a viewpoint of further improvement in the molding stability and the dust generation resistance is a compound (1-1-1) and/or a compound (1-1-6), further preferably a compound (I-1-1).

The phosphite ester compound represented by the general formula (I) can be obtained as a commercially available product, or can also be synthesized by the known method.

The compound (I-1-1) is available, for example, as commercially available "PEP-36" made by ADEKA CORPORATION.

The compound (1-1-6) is available, for example, as commercially available "Doverphos S-9228PC" made by Dover Chemical Corporation.

The content of the phosphite ester compound represented by the general formula (I) is 0.01 to 1 part by mass, and from a viewpoint of further improvement in the molding stability and the dust generation resistance, is preferably 0.02 to 0.5 part by mass, more preferably 0.02 to 0.1 part by mass based on 100 parts by mass of a total amount of the polyarylate resin and the polycarbonate resin. When the content is too small, or too large, the molding stability and the dust generation resistance are deteriorated.

Two or more kinds of the phosphite ester compound represented by the general formula (I) may be used by combining them, and in that case, it is enough if a total amount of them is in the above-mentioned range. Furthermore, the composition of the present invention may contain a phosphorus compound generated by decomposition (hydrolysis or thermal decomposition) of phosphite ester.

It is preferable that the resin composition of the present invention further contains a hindered phenol compound represented by the general formula (II). By containing such hindered phenol compound, the molding stability and the dust generation resistance can be still more further improved.

[Chemical formula 6]

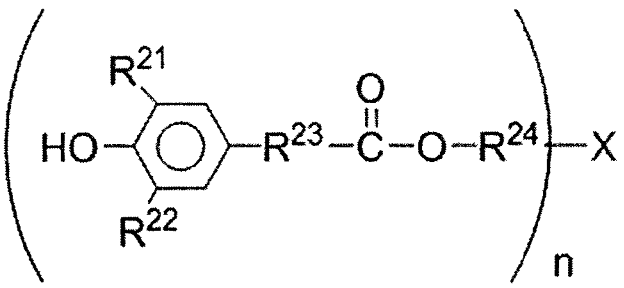

(II)

In the formula (II), X represents a hydrocarbon group or an ether group.

The hydrocarbon group is a monovalent or tetravalent hydrocarbon group having 1 to 20 carbon atoms.

Examples of the monovalent hydrocarbon group include an alkyl group having 10 to 20, preferably 15 to 20, more preferably 16 to 18 carbon atoms. Examples of such alkyl group include a decyl group, an undecyl group, a lauryl group, a tridecyl group, a myristyl group, a pentadecyl group, a cetyl group, a heptadecyl group, a stearyl group, a nonadecyl group, an eicosyl group, and the like.

Examples of the tetravalent hydrocarbon group include a saturated hydrocarbon group having 1 to 2 carbon atoms, preferably a carbon atom.

The ether group is a divalent group, specifically "-O-".

Preferable X is a hydrocarbon group, particularly a monovalent or tetravalent hydrocarbon group.

And, n is an integer of 1 or more, particularly 1 to 4, which is determined depending on the valence of X. When X is monovalent, n is 1. When X is divalent, n is 2. When X is trivalent, n is 3. When X is tetravalent, n is 4.

$R^{21}$ and $R^{22}$ are each independently a hydrogen atom or an alkyl group having 1 to 9 carbon atoms. $R^{21}$ and $R^{22}$ each independently represent an alkyl group having preferably 1 to 5, more preferably 3 to 5 carbon atoms. Examples of a more preferable alkyl group in $R^{21}$ and $R^{22}$ include a n-propyl group, an isopropyl group, a n-butyl group, an isobutyl group, a sec-butyl group, a tert-butyl group, and a pentyl group. Most preferable $R^{21}$ and $R^{22}$ are the same group,

particularly a tert-butyl group simultaneously.

$R^{23}$ and $R^{24}$ each independently represent an alkylene group having 1 to 5 carbon atoms. $R^{23}$ and $R^{24}$ each independently represent preferably an alkylene group having 1 to 3 carbon atoms. Examples of a preferable alkylene group in $R^{23}$ and $R^{24}$ include a methylene group, a dimethylene group, and a triethylene group. Most preferable $R^{23}$ and $R^{24}$ are each independently a methylene group or a dimethylene group, particularly a dimethylene group and a methylene group respectively.

Among the hindered phenol compounds represented by the above-mentioned general formula (II), a hindered phenol compound which is preferable from a viewpoint of further improvement in the molding stability and the dust generation resistance is hindered phenol compounds represented by the general formulas (II-1) and (II-2), particularly a hindered phenol compound represented by the general formula (II-1).

[Chemical formula 7]

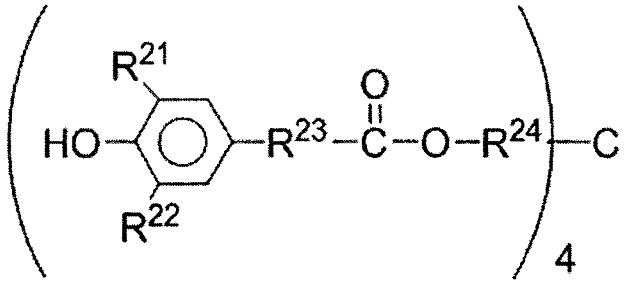

(II-1)

In the formula (II-1), $R^{21}$ and $R^{22}$ are the same as $R^{21}$ and $R^{22}$ in the formula (II), respectively.

In the formula (II-1), $R^{23}$ and $R^{24}$ are the same as $R^{23}$ and $R^{24}$ in the formula (II), respectively.

[Chemical formula 8]

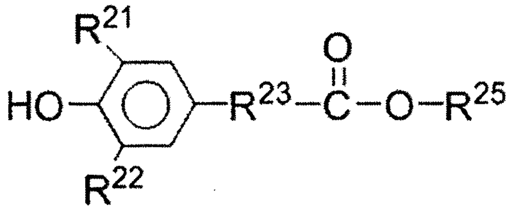

(II-2)

In the formula (II-2), $R^{21}$ and $R^{22}$ are the same as $R^{21}$ and $R^{22}$ in the formula (II), respectively.

In the formula (II-2), $R^{23}$ is the same as $R^{23}$ in the formula (II).

In the formula (II-2), examples of $R^{25}$ include an alkyl group having 11 to 25, preferably 16 to 23, more preferably 16 to 20 carbon atoms. Examples of a more preferable alkyl group include a cetyl group, a heptadecyl group, a stearyl group (= octadecyl group), a nonadecyl group, an eicosyl group, and the like.

Specific examples of the hindered phenol compound represented by the general formula (II) include the following compounds:

Compound (II-1-1): pentaerythritol tetrakis[3-(3,5-di-t-butyl-4-hydroxyphenyl) propionate; in the general formula (II-1), $R^{21}$ = $R^{22}$ = tert-butyl group, $R^{23}$ = dimethylene group, $R^{24}$ = methylene group;

Compound (II-2-1): octadecyl-3-(3,5-di-t-butyl-4-hydroxyphenyl) propionate; in the general formula (II-2), $R^{21}$ = $R^{22}$ = tert-butyl group, $R^{23}$ = dimethylene group, $R^{25}$ = octadecyl group.

A hindered phenol compound which is more preferable from a viewpoint of further improvement in the molding stability and the dust generation resistance is a hindered phenol compound of the general formula (II-1), particularly a compound (II-1-1).

The hindered phenol compound represented by the general formula (II) can be obtained as a commercially available product, or can be synthesized by the known method.

The compound (II-1-1) can be obtained, for example, as commercially available Irganox 1010 and the like made

by BASF SE.

The compound (II-2-1) can be obtained, for example, as commercially available Irganox 1076 and the like made by BASF SE.

The content of the hindered phenol compound represented by the general formula (II) is 0.01 to 1 part by mass, and from a viewpoint of further improvement in the molding stability and the dust generation resistance, is preferably 0.02 to 0.5 part by mass, more preferably 0.02 to 0.1 part by mass, based on 100 parts by mass of a total amount of the polyarylate resin and the polycarbonate resin.

The hindered phenol compound represented by the general formula (II) may be used by combining two or more kinds thereof, and in that case, it is enough if a total amount of them is within the above-mentioned range.

In addition to the above-mentioned components, a releasing agent, a pigment, a dye, a weather-resistant agent, an antioxidant, a heat stabilizer, a flame retardant, an antistatic agent, an impact resistance improving agent, a sliding agent such as ultrahigh molecular weight polyethylene and a fluorine resin, and the like can be added to the resin composition of the present invention, in a range that the properties of the resin composition of the present invention are not deteriorated. It is preferable that the resin composition of the present invention contains a releasing agent. Examples of the releasing agent include fatty acid ester of saturated aliphatic polyol.

A method of producing the resin composition of the present invention is not particularly limited, and it is enough if the state where respective components are uniformly dispersed in the resin composition is achieved. Examples thereof include a method of uniformly blending a polyarylate resin, a polycarbonate resin, silica particles, and a phosphite ester compound, as well as other additives using a tumbler or a Henschel mixer, thereafter, melt-kneading the blend, followed by pelletizing.

A method of molding the resin composition of the present invention is not particularly limited, but examples thereof include an injection molding method, an extrusion molding method, a blow molding method, and a sintering molding method. Inter alia, since the effect of improving the mechanical properties and the moldability is high, an injection molding method is preferable. An injection molding machine used in injection molding is not particularly limited, but examples thereof include an in-line screw type injection molding machine and a plunger type injection molding machine. A resin composition which has been heat-melted in a cylinder in an injection molding machine is metered for every shot, injected into a mold in the melted state, cooled and solidified into a predetermined shape, and is taken out from a mold as a molded article.

The molded article of the present invention can be produced by performing molding using the above-mentioned resin composition having a pellet shape. The molded article of the present invention may be produced by kneading silica particles with the polyarylate resin and/or the polycarbonate resin in advance, and thereafter, further kneading this with remaining necessary components, followed by molding. The molded article of the present invention may also be produced by dry-blending the polyarylate resin, the polycarbonate resin, silica particles, and the phosphite ester compound, and directly molding the dry-blending product without being pelletized.

The resin composition of the present invention is excellent in the molding stability. For example, when the resin composition (pellet) of the present invention is injection-molded at a resin temperature of 340°C and a molding cycle of 900 seconds, and a test specimen shown in Fig. 1 is prepared, a drop rate of the limiting viscosity of a molded article based on the limiting viscosity of a pellet is usually less than 10%, preferably less than 7%, more preferably less than 4%. A detailed measuring method will be shown in examples. Fig. 1 is a view for illustrating a test specimen, (A) is a perspective of a test specimen, and (B) is a front view and a side view of a test specimen. A unit of the dimension in Fig. 1 is "mm".

The molded article of the present invention is excellent in the strength. For example, when the resin composition of the present invention is injection-molded at a resin temperature of 340°C and a molding cycle of 30 seconds, a dumbbell test specimen is prepared, and the bending strength of the test specimen is measured in accordance with JIS K7171, the bending strength is usually 82 MPa or more, preferably 92 MPa or more, more preferably 102 MPa or more. A detailed measuring method will be shown in examples.

The molded article of the present invention is excellent in the heat resistance. For example, when the resin composition of the present invention is injection-molded at a resin temperature of 340°C and a molding cycle of 30 seconds, a dumbbell test specimen is prepared, and a deflection temperature under load is measured at a load of 1.8 MPa in accordance with JIS K7191-1, K7191-2, a deflection temperature under load is usually 148°C or higher, preferably 150°C or higher, more preferably 152°C or higher. A detailed measuring method will be shown in examples.

The molded article of the present invention is excellent in the dimensional stability. For example, when the resin composition of the present invention is injection-molded at a resin temperature of 340°C and a molding cycle of 30 seconds, a ring-type molded article is prepared, and retention under the low temperature environment and retention under the high temperature environment are repeated, a rate of change in an internal diameter is within a range of ±0.10, preferably within a range of ±0.08, more preferably within a range of ±0.06. A detailed measuring method will be shown in examples.

The molded article of the present invention is excellent in the dust generation resistance. For example, when

the resin composition of the present invention is injection-molded at a resin temperature of 340°C and a molding cycle of 30 seconds, a test specimen shown in Fig. 1 is prepared, and vibration at 300 times/min is given to 100 test specimen for 5 hours, a dust generation rate of the molded article is usually less than 0.10%, preferably less than 0.06%, more preferably less than 0.02%. A detailed measuring method will be shown in examples.

The molded article of the present invention is excellent in the external appearance. For example, when the resin composition of the present invention is injection-molded at a resin temperature of 340°C and a molding cycle of 30 seconds, a dumbbell test specimen is prepared, and the luminance L* is measured with D65/2° light source reflected light, the luminance of the molded article is usually less than 25, preferably less than 17, more preferably less than 9. A detailed measuring method will be shown in examples.

Since a molded article produced from the resin composition of the present invention is excellent in the dust generation resistance, the resin composition of the present invention is useful in producing (molding) a product in which dust generation easily becomes a problem, for example, a molded article such as a camera module part, a lens unit part, and an actuator part.

The camera module part is a part made of a resin, which constitutes an electronic part having the camera function mounted in a cellular phone, a game machine, a personal computer, a car-mounted camera, a cellular phone terminal or the like.

The lens unit part is a part made of a resin, which constitutes a lens unit of an electronic part having the camera function mounted in a cellular phone, a game machine, a person computer, a car-mounted camera, a cellular phone terminal or the like. The lens unit part is one of constituent parts of the camera module part.

The actuator part is a part made of a resin, which constitutes an actuator that controls the movement or the mechanical action in a cellular phone, a game machine, a personal computer, a car-mounted camera, a cellular phone terminal or the like. The actuator part is one of constituent parts of the camera module part.

EXAMPLES

The present invention will be specifically illustrated by way of Examples and Comparative Examples.

1. Raw material

- Polyarylate resin; "U-Powder" made by UNITIKA LTD. (limiting viscosity 0.54):
- Polycarbonate resin; "CALIBRE 200-13" made by Sumika Styron Polycarbonate Limited (limiting viscosity 0.50):
- Silica 0.3; spherical silica, "SFP-20M" made by Denka Company Limited (average particle diameter 0.3 μm):
- Silica 0.5; spherical silica, "SC2500-SXJ" made by ADMATECHS Co., Ltd. (average particle diameter 0.5 μm):
- Silica 5.0; spherical silica, "FB-5SDC" made by Denka Company Limited (average particle diameter 5 μm):
- Silica 10; spherical silica, "FB-12D" made by Denka Company Limited (average particle diameter 10 μm):
- Silica 15; spherical silica, "FB-945" made by Denka Company Limited (average particle diameter 15 μm):
- Alumina 3.0; spherical alumina, "DAW-03" made by Denka Company Limited (average particle diameter 3 μm):
- Phosphite ester compound; "PEP-36" made by ADEKA CORPORATION; the above-mentioned compound (1-1-1):
- Phosphite ester compound; "Doverphos S-9228PC" made by Dover Chemical Corporation; the above-mentioned compound (I-1-6):
- Phosphite ester compound; "PEP-8" made by ADEKA CORPORATION; represented by the following chemical formula:

[Chemical formula 9]

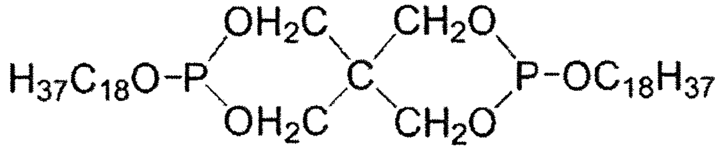

- Hindered phenol compound: "Irganox 1010" made by BASF SE; the above-mentioned compound (II-1-1):
- Releasing agent; "VPG-861" made by Emery Oleochemicals GmbH; fatty acid ester of saturated aliphatic polyol:
- Pigment; carbon black.

2. Assessing method

(1) Bending strength

A resin composition was molded at a resin temperature of 340°C and a molding cycle of 30 seconds using an injection molding machine (made by TOSHIBA MACHINE CO., LTD., Model Number: EC100N II), to prepare a dumbbell test specimen. Using the resulting test specimen, measurement was performed in accordance with JIS K7171. The strength was assessed by the following method based on the bending strength S.

⊙; 102 MPa ≤ S;
O; 92 MPa ≤ S < 102 MPa;
Δ; 82 MPa ≤ S < 92 MPa; (no practical problem)
x; S < 82 MPa.

(2) DTUL (deflection temperature under load) (heat resistance)

Using the test specimen obtained in (1), measurement was performed at a load of 1.8 MPa in accordance with JIS K7191-1, K7191-2. From a viewpoint of the required heat resistance at the time of soldering, when a deflection temperature under load is 148°C or higher, this is within a range of no practical problem. The heat resistance was assessed based on a deflection temperature under load by the following method:

⊙; 152°C or higher;
⊙; 150°C or higher and lower than 152°C;
Δ; 148°C or higher and lower than 150°C; (no practical problem)
×; Lower than 148°C.

(3) Dimensional stability

Using a resin composition, a ring-type molded article of external diameter 30 mm, internal diameter 26 mm, and thickness 2 mm was molded by injection molding (1-point side gate) at a resin temperature of 340°C and a molding cycle of 30 seconds. Thereafter, the internal diameter dimension was multipoint measured with a high accuracy two-dimensional measuring device (made by KEYENCE CORPORATION, Model Number: UM-8400), to obtain an average internal diameter. And, "-40°C × 1 hour"→"80°C × 1 hour" was defined as 1 cycle, treatment was performed at a total of 30 cycles, and a rate of change in an average internal diameter was obtained. Regarding this numerical value, a smaller value shows the better dimensional stability, and in the case of within a range of ±0.10, it was determined that the dimensional stability has no practical problem. The dimensional stability was assessed based on a rate of change by the following method:

⊙; ±0.06;
O; ±0.08;
Δ; ±0.10; (no practical problem)
x; Less than -0.1 or more than +0.1.

(4) Molding stability

A resin composition was molded at a resin temperature of 340°C and a molding cycle of 900 seconds using an injection molding machine (J35AD made by The Japan Steel Works, LTD.), a test specimen shown in Fig. 1 was prepared, and a drop rate of the limiting viscosity of a molded article was obtained based on the following expression. Regarding this numerical value, a smaller value shows the more excellent molding stability, and in the case of less than 10%, it was determined that the molding stability has no practical problem.

[Mathematical expression 1]

Drop rate of limiting viscosity of molded article = 100 × (limiting viscosity of pellet - limiting viscosity of molded article) ÷ limiting viscosity of pellet

⊙; Less than 4%;
O; Less than 7%;
Δ; Less than 10%; (no practical problem)
x; 10% or more.

(5) Tumbling test (dust generation resistance)

A resin composition was molded at a resin temperature of 340°C and a molding cycle of 30 seconds using an injection molding machine (J35AD made by The Japan Steel Works, LTD.), and a test specimen shown in Fig. 1 was prepared.
One hundred of the test specimens were placed into a stainless container (internal diameter 70 mm, height 180 mm), and set in a shaker SA300 made by Yamato Scientific co., ltd., and vibration at 300 times/min was given for 5 hours. After 5 hours passed, the molded articles were taken out from the container, and a dust generation rate was obtained based on the following expression. Regarding this numerical value, as a value is smaller, the dust generation resistance is more excellent, and in the case of less than 0.1%, it was determined that the dust generation resistance has no practical problem.

[Mathematical expression 2]

Dust generation rate = 100 × (total mass of 100 test specimens before test - total mass of 100 test specimens after test) ÷ total mass of 100 test specimens before test

⊙; Less than 0.02%;
O; Less than 0.06%;
Δ; Less than 0.10%; (no practical problem)
x; 0.10% or more.

(6) External appearance

A resin composition was molded at a resin temperature of 340°C and a molding cycle of 30 seconds using an injection molding machine (made by TOSHIBA MACHINE CO., LTD., Model Number: EC100N II), and a dumbbell test specimen was prepared.
Regarding the resulting test specimen, the luminance L* was measured with D65/2° light source reflected light using a spectrocolorimeter (SE6000 Type made by NIPPON DENSHOKU INDUSTRIES Co., Ltd.). Since the test specimen is colored with black with carbon black, as L* is lower, there is smaller deterioration in the external appearance due to filler floating, and less than 25 was determined to have no practical problem.

⊙; Less than 9;
O; Less than 17;
Δ; Less than 25; (no practical problem)
×; 25 or more.

Examples 1 to 11 and Comparative Examples 1 to 11

Respective raw materials were melt-kneaded at a barrel temperature of 320°C and at a blending ratio shown in Table 1 or Table 2 using a co-rotation twin-screw extruder (made by TOSHIBA MACHINE CO., LTD, Model Number: TEM-37BS).
A resin composition which had been drawn into a strand from a nozzle was soaked in a water bath to cool and solidify, cut with a pelletizer, and hot air-dried at 120°C for 12 hours to obtain a resin composition (pellet).
The constitution of the resin compositions obtained in examples and comparative examples and assessment results thereof are shown in Table 1 and Table 2.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Resin constitution | Polyarylate resin (% by mass) | 30 | 90 | 30 | 30 | 30 | 30 | 30 | 30 | 30 | 30 | 30 |
| | Polycarbonate resin (% by mass) | 70 | 10 | 70 | 70 | 70 | 70 | 70 | 70 | 70 | 70 | 70 |
| | Polyarylate resin+ polycarbonate resin total amount (parts by mass) | 100 | 100 | 100 | 100 | 100 | 100 | 100 | 100 | 100 | 100 | 100 |
| | Silica 0.5 (parts by mass) | - | - | - | - | 25 | - | - | - | - | - | - |
| | Silica 5.0 (parts bv mass) | 25 | 25 | 5 | 60 | - | - | 25 | 25 | 25 | 25 | 25 |
| | Silica10 (parts by mass) | - | - | - | - | - | 25 | - | - | - | - | - |
| | PEP-36 (parts bv mass) | 0.05 | 0.05 | 0.05 | 0.05 | 0.05 | 0.05 | 0.01 | 1.0 | 0.05 | 0.025 | - |
| | S-9228PC (parts by mass) | - | - | - | - | - | - | - | - | - | - | 0.05 |
| | Irganox 1010 (parts bv mass) | - | - | - | - | - | - | - | - | 0.05 | 0.025 | - |
| | Releasing agent (parts by mass) | - | - | - | - | - | - | - | - | - | 0.2 | - |
| | Carbon black (parts by mass) | 0.5 | 0.5 | 0.5 | 0.5 | 0.5 | 0.5 | 0.5 | 0.5 | 0.5 | 0.5 | 0.5 |

(continued)

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Assessment | Bending strength (MPa) | 102⊙ | 103⊙ | 88Δ | 115⊙ | 102⊙ | 102⊙ | 102⊙ | 102⊙ | 102⊙ | 102⊙ | 102⊙ |
| | DTUL(1.8MPa) (°C) | 132⊙ | 173⊙ | 151○ | 152⊙ | 152⊙ | 152⊙ | 152⊙ | 152⊙ | 152⊙ | 152⊙ | 152⊙ |
| | Dimensional stability (%) | -0.06⊙ | -0.04⊙ | -0.09Δ | -0.03⊙ | -0.06⊙ | -0.06⊙ | -0.06⊙ | -0.06⊙ | -0.06⊙ | -0.06⊙ | -0.06⊙ |
| | Molding stability (%) | 4○ | 4○ | 4○ | 4○ | 4○ | 4○ | 6○ | 5○ | 3⊙ | 3⊙ | 6.5○ |
| | Tumbling test (% by mass) | 0.01⊙ | 0.01⊙ | 0.01⊙ | 0.05○ | 0.01⊙ | 0.01⊙ | 0.03○ | 0.03○ | 0.01⊙ | 0.01⊙ | 0.04○ |
| | External appearance L* | 8⊙ | 9○ | 7⊙ | 10○ | 20Δ | 10○ | 8⊙ | 8⊙ | 8⊙ | 8⊙ | 8⊙ |

-; The relevant component was not used.

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|
| Resin constitution | Polyarylate resin (% by mass) | 20 | 95 | 30 | 30 | 30 | 30 | 30 | 30 | 30 | 30 | 30 |
| | Polycarbonate resin (% by mass) | 80 | 5 | 70 | 70 | 70 | 70 | 70 | 70 | 70 | 70 | 70 |
| | Polyarylate resin + polycarbonate resin total amount (parts by mass) | 100 | 100 | 100 | 100 | 100 | 100 | 100 | 100 | 100 | 100 | 100 |
| | Silica 0.3 (parts by mass) | - | - | - | - | 25 | - | - | - | - | - | - |
| | Silica 0.5 (parts by mass) | - | - | - | - | - | - | - | - | - | - | - |
| | Silica 5.0 (parts by mass) | 25 | 25 | 3 | 70 | - | - | 25 | 25 | 25 | - | 25 |
| | Silica 10 (parts by mass) | - | - | - | - | - | - | - | - | - | - | |
| | Silica 15 (parts by mass) | - | - | - | - | - | 25 | - | - | - | - | - |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|
| | Alumina 3.0 (parts by mass) | - | - | - | - | - | - | - | - | - | 25 | - |
| | PEP-36(parts by mass) | 0.05 | 0.05 | 0.05 | 0.05 | 0.05 | 0.05 | 0.005 | 1.5 | - | 0.05 | - |
| | PEP-8 (parts by mass) | - | - | - | - | - | - | - | - | 0.05 | - | - |
| | Carbon black (parts by mass) | 0.5 | 0.5 | 0.5 | 0.5 | 0.5 | 0.5 | 0.5 | 0.5 | 0.5 | 0.5 | 0.5 |
| Assessment | Bending strength (MPa) | 100○ | 101○ | 85Δ | (B) | 103⊙ | 102⊙ | 102⊙ | 102⊙ | 102⊙ | 90Δ | 102⊙ |
| | DTUL (1.8MPa)(°C) | 145× | 175⊙ | 1500 | * | 152⊙ | 152⊙ | 152⊙ | 152⊙ | 152⊙ | 149Δ | 152⊙ |
| | Dimensional stability (%) | -0.15× | -0.04⊙ | -0.12× | * | -0.06⊙ | -014× | -0.06⊙ | -0.06⊙ | -0.06⊙ | -0.11× | -0.06⊙ |
| | Molding stability (%) | 4○ | (A) | 4○ | * | 4○ | 4○ | 12× | 10× | 13× | 8Δ | 14× |
| | Tumbling test (% by mass) | 0.01⊙ | (A) | 0.01⊙ | * | 0.01⊙ | 0.01⊙ | 0.12× | 0.11× | 0.15× | 0.08Δ | 0.15× |
| | External appearance L* | 8⊙ | 10○ | 7⊙ | * | 30× | 10○ | 8⊙ | 8⊙ | 8⊙ | 15○ | 8⊙ |

-; The relevant component was not used. (A); The flowability was bad, and molding was impossible. (B); A strand could not be drawn, and extrusion was impossible. *; Not assessed.

All of the resin compositions of Examples 1 to 11 were excellent in the dust generation resistance and the external appearance while being excellent in the strength, the heat resistance, the dimensional stability, and the molding stability.

In the resin composition of Comparative Example 1, with regard to a mass ratio between the polyarylate resin and the polycarbonate resin, since a ratio of the polyarylate resin is too low, the heat resistance and the dimensional stability were deteriorated.

In the resin composition of Comparative Example 2, with regard to a mass ratio between the polyarylate resin and the polycarbonate resin, since a ratio of the polyarylate resin is too high, the flowability was deteriorated, and the resin composition could not be molded.

In the resin composition of Comparative Example 3, since the content of silica particles is too small, the dimensional stability was deteriorated.

In the resin composition of Comparative Example 4, since the content of silica particles is too large, pelletization by extrusion became difficult at the time of melt-kneading.

In the resin composition of Comparative Example 5, since an average particle diameter of silica particles is too small, the external appearance was deteriorated.

In the resin composition of Comparative Example 6, since an average particle diameter of silica particles is too large, the dimensional stability was deteriorated.

In the resin compositions of Comparative Examples 7 and 8, since the content of a specific phosphite ester compound is too small, or too large, the molding stability and the dust generation resistance were deteriorated.

In the resin composition of Comparative Example 9, since a phosphite ester compound which is different in a kind from a specific phosphite ester compound was used, the molding stability and the dust generation resistance were deteriorated.

In the resin composition of Comparative Example 10, since alumina particles are contained in place of silica particles, the dimensional stability was deteriorated.

In the resin composition of Comparative Example 11, since a specific phosphite ester compound is not contained, the molding stability and the dust generation resistance were deteriorated.

INDUSTRIAL APPLICABILITY

The resin composition of the present invention is useful for molding a camera module part, a lens unit part, and an actuator part, which are used in a cellular phone, a game machine, a personal computer, a car-mounted camera, a cellular phone terminal, and the like.

## Claims

1. A resin composition comprising a polyarylate resin, a polycarbonate resin, silica particles having an average particle diameter of 0.5 to 10 μm, and a phosphite ester compound represented by the general formula (I),

   wherein a mass ratio between the polyarylate resin and the polycarbonate resin is 25/75 to 90/10,
   the average particle diameter of the silica particles is defined by a particle diameter value at weight accumulation 50% when a particle diameter distribution is measured using a laser diffraction particle size distribution meter as a particle size distribution measuring apparatus,
   a content of the silica particles is 5 to 60 parts by mass based on 100 parts by mass of a total amount of the polyarylate resin and the polycarbonate resin, and
   a content of the phosphite ester compound is 0.01 to 1 part by mass based on 100 parts by mass of a total amount of the polyarylate resin and the polycarbonate resin:

   [Chemical formula 1]

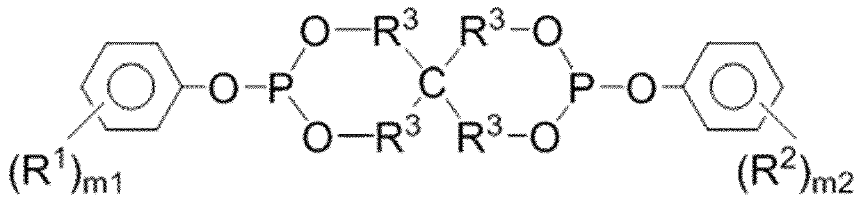

(I)

(in the formula (I), m1 and m2 are each independently an integer of 0 to 5;
$R^1$ and $R^2$ each independently represent an alkyl group having 1 to 12 carbon atoms, which may have a substituent; and
four $R^3$s each independently represent an alkylene group having 1 to 5 carbon atoms.).

**2.** The resin composition of Claim 1, wherein the phosphite ester compound is a compound represented by the general formula (I-1):

[Chemical formula 2]

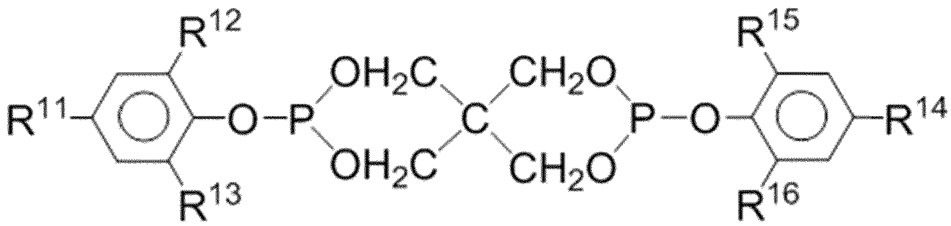

(I-1)

(in the formula (1-1), $R^{11}$ to $R^{16}$ are each independently a hydrogen atom or an alkyl group having 1 to 10 carbon atoms, which may have a substituent.).

**3.** The resin composition of Claim 1 or 2, wherein the resin composition further contains a hindered phenol compound represented by the general formula (II) in an amount of 0.01 to 1 part by mass based on 100 parts by mass of a total amount of the polyarylate resin and the polycarbonate resin:

[Chemical formula 3]

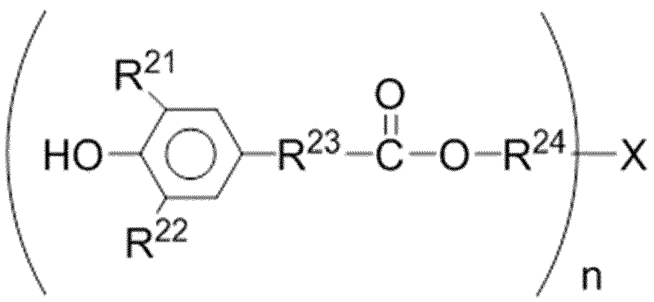

(II)

(in the formula (II), X represents a hydrocarbon group or an ether group;
n is an integer of 1 or more, which is determined depending on X;
$R^{21}$ and $R^{22}$ each independently represent a hydrogen atom or an alkyl group having 1 to 9 carbon atoms; and
$R^{23}$ and $R^{24}$ each independently represent an alkylene group having 1 to 5 carbon atoms.).

**4.** A molded article comprising the resin composition of any of Claims 1 to 3.

**5.** The molded article of Claim 4, wherein the molded article is a camera module part.

**6.** The molded article of Claim 4, wherein the molded article is a lens unit part.

**7.** The molded article of Claim 4, wherein the molded article is an actuator part.

## Patentansprüche

1. Eine Harzzusammensetzung, umfassend ein Polyarylatharz, ein Polycarbonatharz, Siliciumdioxidteilchen mit einem mittleren Teilchendurchmesser von 0,5 bis 10 μm und eine Phosphitesterverbindung, dargestellt durch die allgemeine Formel (I),

   wobei ein Massenverhältnis zwischen dem Polyarylatharz und dem Polycarbonatharz 25/75 bis 90/10 beträgt, der mittlere Teilchendurchmesser der Siliciumdioxidteilchen durch einen Teilchendurchmesserwert bei einer Gewichtsakkumulation von 50% definiert ist, wenn eine Teilchendurchmesserverteilung unter Verwendung eines Laserbeugungs-Teilchengrößenverteilungsmessers als ein Teilchengrößenverteilungs-Messgerät gemessen wird,
   ein Gehalt der Siliciumdioxidteilchen 5 bis 60 Masseteile, bezogen auf 100 Masseteile einer Gesamtmenge des Polyarylatharzes und des Polycarbonatharzes, beträgt und
   ein Gehalt der Phosphitesterverbindung 0,01 bis 1 Masseteil, bezogen auf 100 Masseteile einer Gesamtmenge des Polyarylatharzes und des Polycarbonatharzes, beträgt:

   [Chemische Formel 1]

   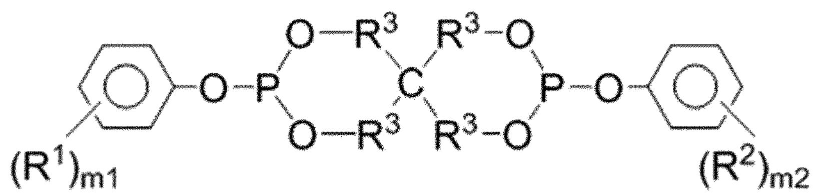

   (I)

   (in der Formel (I) sind m1 und m2 jeweils unabhängig eine ganze Zahl von 0 bis 5;
   $R^1$ und $R^2$ stellen jeweils unabhängig eine Alkylgruppe mit 1 bis 12 Kohlenstoffatomen dar, die einen Substituenten aufweisen kann; und
   vier $R^3$ stellen jeweils unabhängig eine Alkylengruppe mit 1 bis 5 Kohlenstoffatomen dar).

2. Die Harzzusammensetzung nach Anspruch 1, wobei die Phosphitesterverbindung eine Verbindung, dargestellt durch die allgemeine Formel (I-1), ist:

   [Chemische Formel 2]

   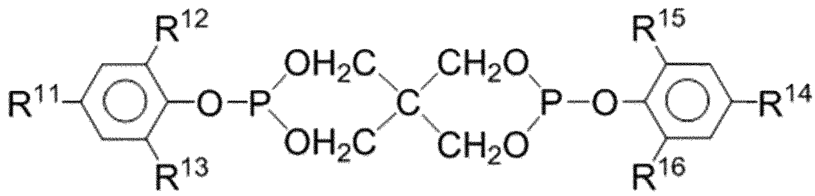

   (I-1)

   (in der Formel (I-1) sind $R^{11}$ bis $R^{16}$ jeweils unabhängig ein Wasserstoffatom oder eine Alkylgruppe mit 1 bis 10 Kohlenstoffatomen, die einen Substituenten aufweisen kann).

3. Die Harzzusammensetzung nach Anspruch 1 oder 2, wobei die Harzzusammensetzung weiter eine gehinderte Phenolverbindung, dargestellt durch die allgemeine Formel (II), in einer Menge von 0,01 bis 1 Masseteil, bezogen auf 100 Masseteile einer Gesamtmenge des Polyarylatharzes und des Polycarbonatharzes, enthält:

[Chemische Formel 3]

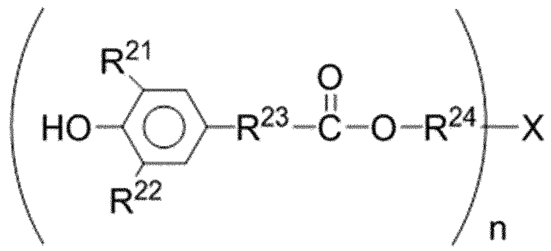

(II)

(in der Formel (II) stellt X eine Kohlenwasserstoffgruppe oder eine Ethergruppe dar;
n ist eine ganze Zahl von 1 oder mehr, die in Abhängigkeit von X festgelegt ist;
$R^{21}$ und $R^{22}$ stellen jeweils unabhängig ein Wasserstoffatom oder eine Alkylgruppe mit 1 bis 9 Kohlenstoffatomen dar; und
$R^{23}$ und $R^{24}$ stellen jeweils unabhängig eine Alkylengruppe mit 1 bis 5 Kohlenstoffatomen dar).

**4.** Ein Formgegenstand, umfassend die Harzzusammensetzung nach einem der Ansprüche 1 bis 3.

**5.** Der Formgegenstand nach Anspruch 4, wobei der Formgegenstand ein Kameramodul-Bauteil ist.

**6.** Der Formgegenstand nach Anspruch 4, wobei der Formgegenstand ein Objektiveinheit-Bauteil ist.

**7.** Der Formgegenstand nach Anspruch 4, wobei der Formgegenstand ein Bedienungselement-Bauteil ist.

**Revendications**

**1.** Composition de résine comprenant une résine de polyarylate, une résine de polycarbonate, des particules de silice ayant un diamètre de particule moyen de 0,5 à 10 μm, et un composé ester phosphite représenté par la formule générale (I), dans laquelle

le rapport en masse entre la résine de polyarylate et la résine de polycarbonate est de 25/75 à 90/10,
le diamètre moyen des particules de silice est définie par la valeur du diamètre de particule pour un poids cumulé de 50 % quand la distribution de diamètre de particule est mesurée par utilisation d'un dispositif de mesure de distribution de taille de particule à diffraction laser en tant qu'appareil de mesure de distribution de taille de particule,
la teneur en les particules de silice est de 5 à 60 parties en masse pour 100 parties en masse de la quantité totale de la résine de polyarylate et de la résine de polycarbonate, et
la teneur en le composé ester phosphite est de 0,01 à 1 partie en masse pour 100 parties en masse de la quantité totale de la résine de polyarylate et de la résine de polycarbonate :

[formule chimique 1]

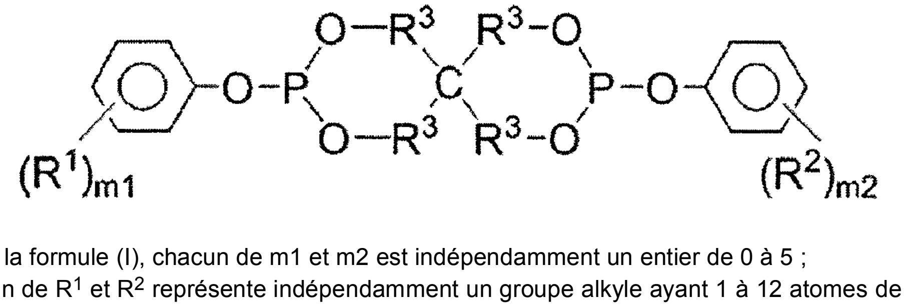

(I)

(dans la formule (I), chacun de m1 et m2 est indépendamment un entier de 0 à 5 ;
chacun de $R^1$ et $R^2$ représente indépendamment un groupe alkyle ayant 1 à 12 atomes de carbone, qui peut porter un substituant ; et
chacun des quatre $R^3$ représente indépendamment un groupe alkylène ayant 1 à 5 atomes de carbone).

**2.** Composition de résine selon la revendication 1, dans laquelle le composé ester phosphite est un composé représenté

par la formule générale (I-1) :

[formule chimique 2]

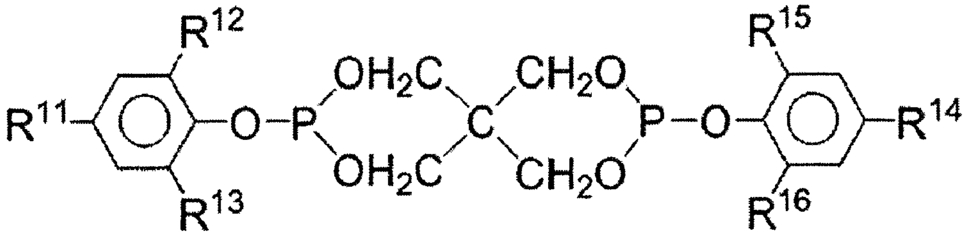

(I-1)

(dans la formule (I-1), chacun des $R^{11}$ à $R^{16}$ est indépendamment un atome d'hydrogène ou un groupe alkyle ayant 1 à 10 atomes de carbone, qui peut porter un substituant).

**3.** Composition de résine selon la revendication 1 ou 2, laquelle composition de résine contient en outre un composé phénolique encombré représenté par la formule générale (II) en une quantité de 0,01 à 1 partie en masse pour 100 parties en masse de la quantité totale de la résine de polyarylate et de la résine de polycarbonate :

[formule chimique 3]

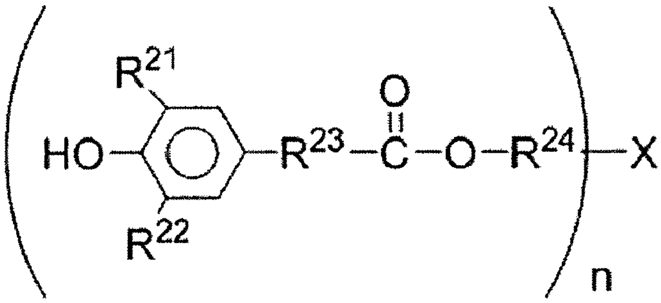

(II)

(dans la formule (II), X représente un groupe hydrocarboné ou un groupe éther ;
n est un entier valant 1 ou plus, qui est déterminé en fonction de X ;
chacun de $R^{21}$ et $R^{22}$ représente indépendamment un atome d'hydrogène ou un groupe alkyle ayant 1 à 9 atomes de carbone ; et
chacun de $R^{23}$ et $R^{24}$ représente indépendamment un groupe alkylène ayant 1à 5 atomes de carbone).

**4.** Article moulé comprenant la composition de résine de l'une quelconque des revendications 1à 3.

**5.** Article moulé selon la revendication 4, lequel article moulé est une pièce de module de caméra.

**6.** Article moulé selon la revendication 4, lequel article moulé est une pièce d'unité de lentille.

**7.** Article moulé selon la revendication 4, lequel article moulé est une pièce d'actionneur.

Fig.1

(A)

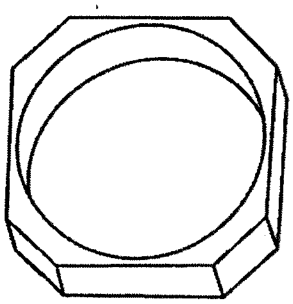

(B)

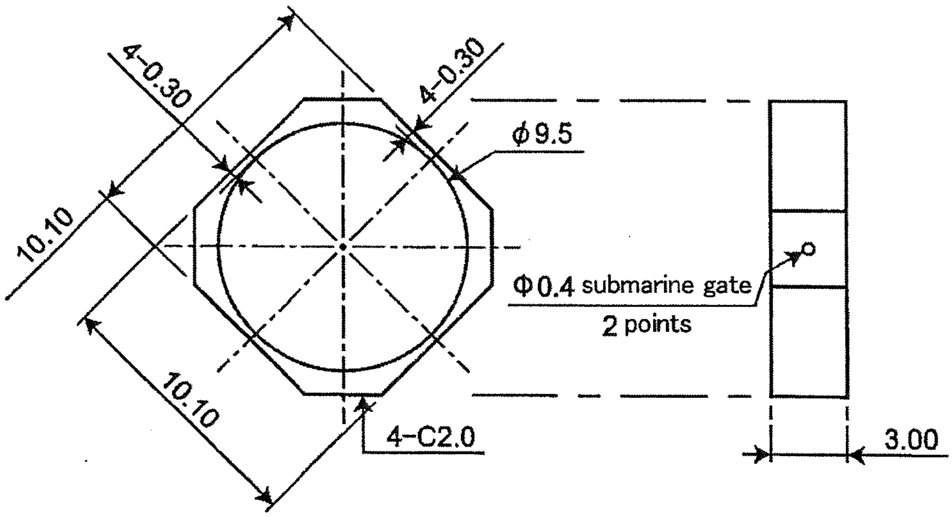

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008001848 A
- JP 2010106165 A
- JP 2011068831 A
- EP 5246646 A
- EP 1956044 A1